# EUROPEAN PATENT APPLICATION

(11) **EP 3 176 005 A1**
(43) Date of publication of application: **07.06.2017**
(21) Application number: 16199176.5
(22) Date of filing: 16.11.2016
(51) Int. Cl.: B60C 9/00, B60C 9/20

(54) **A BIDIRECTIONAL MONOBELT CONSTRUCTION FOR A PNEUMATIC TIRE**

(30) Priority: 24.11.2015 US 201514950680
(71) Applicant: The Goodyear Tire & Rubber Company, Akron, Ohio 44316 (US)
(72) Inventor: MUTHIGI, Phaniraj, Copley, OH 44321 (US); GILLICK, James Gregory, Akron, OH 44313 (US); HUBBELL, David Ray, Hartville, 44632 (US); PESCHECK, Johann, B-9000 Ghent (BE); PUTHILLATH, Padmakumar, Greer, South Caroline 29650 (US)
(74) Representative: Kutsch, Bernd

(57) **Abstract**

A pneumatic tire comprising a carcass reinforced by a carcass ply (14) extending from a first bead to a second bead (28a, 28b) and a belt structure (101) being disposed radially outward of the carcass ply (14) in a crown portion of the pneumatic tire (10) is disclosed. The belt structure (101) has a first belt portion or layer (18) and a second portion comprising a plurality of bands (16), wherein the first portion or layer (18) extends axially from a first shoulder portion of the crown portion of the tire (10) to a second shoulder portion of the crown portion of the tire (10) or extends axially between a first shoulder portion of the crown portion of the tire (10) and a second shoulder portion of the crown portion of the tire (10) over at least 50% of the section width of the tire (10), preferably in a range of from 70% to 95% of the section width of the tire (10). Each band (16) of the plurality of bands (16) has an axial width less than the axial width of the first belt portion or layer (18) or wherein each band (16) of the plurality of band (16) has an axial width in a range of from 5% to 25% of the section width of the tire (10). At least one band (16) of the plurality of bands (16) includes a first group of cords or filaments oriented in a first direction relative to the direction of the centerline (CL) of the pneumatic tire (10) and a second group of cords or filaments oriented in a second direction different from the first direction relative to the direction of the centerline (CL) of the pneumatic tire (10).

## Description

### Field of the Invention

The present invention relates to a pneumatic tire, and more particularly, to a belt construction for a pneumatic tire.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply. A belt structure is disposed radially between the carcass ply and tread rubber.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as polyamide/nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A conventional belt structure comprises a plurality of reinforcement layers in which cords are laid parallel to each other. Due to the unidirectional load carrying capability of each reinforcement layer, an even number of such layers may be stacked up to manage the force transfer in opposite directions. Two such reinforcement layers of steel wires may be used as a belt-package in a typical radial passenger tire, contributing significant weight to the pneumatic tire.

### Summary of the Present Invention

The invention relates to a tire in accordance with claim 1.

Dependent claims refer to preferred embodiments of the invention.

A pneumatic tire in accordance with a preferred aspect of the present invention includes a carcass reinforced by a carcass ply extending from a first bead to a second bead and a belt structure including a first portion and a second portion. The belt structure is disposed radially outward of the carcass ply in a crown portion of the pneumatic tire. The first portion includes a belt with a belt width extending axially from a first shoulder portion of the crown portion to a second shoulder portion of the crown portion. The second portion includes a plurality of bands with band widths less than the belt width. One of the bands has a first group of cords oriented in a first direction relative to a centerline of the pneumatic tire and a second group of cords oriented in a second direction relative to the centerline of the pneumatic tire.

According to a preferred aspect of the pneumatic tire, the first group of cords has a linear density value in the range between 1000 dtex to 4000 dtex.

According to still another preferred aspect of the pneumatic tire, the first group of cords has a structure of one single polyamide/nylon core yarn and only two aramid wrap yarns.

According to yet another preferred aspect of the pneumatic tire, the first group of cords has an end count of cord ends per 2.54 cm in the range between 15 - 32.

According to still another preferred aspect of the pneumatic tire, the second group of cords has a linear density value in the range between 1000 dtex to 2000 dtex.

According to yet another preferred aspect of the pneumatic tire, the second group of cords has a linear density value in the range between 3000 dtex to 4000 dtex.

According to still another preferred aspect of the pneumatic tire, the second group of cords has a structure of one single polyamide/nylon core yarn and only two aramid wrap yarns.

According to yet another preferred aspect of the pneumatic tire, the second group of cords has an end count of cord ends per inch in the range between 15 - 32.

According to still another preferred aspect of the pneumatic tire, the belt structure includes rubberized yarns oriented in several directions.

According to yet another preferred aspect of the pneumatic tire, the belt structure includes rubberized metallic cords oriented in several directions.

According to still another preferred aspect of the pneumatic tire, the belt structure includes both rubberized yarns and rubberized metallic cords oriented in several directions.

According to yet another preferred aspect of the pneumatic tire, a single band of the belt structure includes rubberized yarns oriented in several directions.

According to still another preferred aspect of the pneumatic tire, a single band of the belt structure includes rubberized metallic cords oriented in several directions.

According to yet another preferred aspect of the pneumatic tire, a single band of the belt structure includes both rubberized yarns and rubberized metallic cords oriented in several directions.

According to still another preferred aspect of the pneumatic tire, the belt structure is entirely constructed single continuous band into a single one-piece structure.

According to yet another preferred aspect of the pneumatic tire, the first group of cords is interlaced with the second group of cords.

According to still another preferred aspect of the pneumatic tire, the first group of cords is radially spaced apart from the second group of cords.

In accordance with the invention a pneumatic tire comprising a carcass reinforced by a carcass ply extending from a first bead to a second bead and a belt structure being disposed radially outward of the carcass ply in a crown portion of the pneumatic tire is disclosed. The belt structure has a first belt portion or layer and a second belt portion comprising a plurality of bands, wherein the first belt portion or layer extends axially from a first shoulder portion of the crown portion of the tire to a second shoulder portion of the crown portion of the tire or extends axially between a first shoulder portion of the crown portion of the tire and a second shoulder portion of the crown portion of the tire over at least 50% of the section width of the tire, preferably in a range of from 70% to 95% of the section width of the tire. Each band of the plurality of bands has an axial width less than the axial width of the first belt portion or layer or each band of the plurality of band has an axial width in a range of from 5% to 25% of the section width of the tire. At least one band of the plurality of bands includes a first group of cords or filaments oriented in a first direction relative to the direction of the centerline CL of the pneumatic tire and a second group of cords or filaments oriented in a second direction different from the first direction relative to the direction of the centerline of the pneumatic tire.

In accordance with a preferred aspect of the invention, the cords or filaments of the first group extend in parallel with respect to each other and make a first angle α with the centerline CL and the cords of filaments of the second group extend in parallel with respect to each other and make a second angle ß with the direction centerline CL and at least one of the following is true:
(i) α = - ß; and/or
(ii) α is in a range of from 1 to 45 degrees or 10 to 30 degrees; and/or
(iii) ß is in a range of from -1 to -45 degrees or -10 to -30 degrees.

In accordance with a preferred aspect of the invention, the second portion comprises 3 to 6 bands.

In accordance with a preferred aspect of the invention, each of the plurality of bands has the same axial width.

In accordance with a preferred aspect of the invention, wherein each of the plurality of bands has the same orientation of the cords or filaments in the respective band.

In accordance with a preferred aspect of the invention, the plurality of band are arranged in a non-overlapping relationship with the clearance between the bands in the axial direction is in a range of from 2% to 20%, preferably 5% to 15%, of the section width of the tire.

In accordance with a preferred aspect of the invention, the plurality of bands are located radially outside of and adjacent to the first portion or layer.

In accordance with a preferred aspect of the invention, the first belt portion or layer also includes a first group of cords or filaments oriented in a first direction relative to the direction of the centerline CL of the pneumatic tire and a second group of cords or filaments oriented in a second direction different from the first direction relative to the direction of the centerline of the pneumatic tire. In this case, the cords or filaments of the first group in the first belt portion or layer extend in parallel with respect to each other and make a first angle α' with the centerline CL and the cords of filaments of the second group in the first belt portion or layer extend in parallel with respect to each other and make a second angle ß' with the direction centerline CL and at least one of the following is true:
(i) α' = - ß'; and/or
(ii) α' is in a range of from 10 to 60 degrees or 35 to 60 degrees; and/or
(iii) ß' is in a range of from -10 to -60 degrees or -35 to -60 degrees.

In accordance with one aspect of the invention, the angles may be α' = α and ß' = ß.

In accordance with another aspect of the invention, α' is larger than α and ß' is larger than ß.

The materials for the cords/filaments used in first belt portion and the second belt portion are preferably the same. The same applies to the cord constructions, end counts and cord densities.

A method in accordance with the present invention designs a pneumatic tire. The method includes the steps of replacing a first belt and a second belt with a single third belt, the third belt comprising a first portion and an integral separate second portion, the first portion comprising a belt with a belt width extending axially from a first shoulder portion of the crown portion to a second shoulder portion of the crown portion, the second portion comprising a plurality of bands with band widths less than the belt width, one of the bands having a first group of cords oriented in a first direction relative to a centerline of the pneumatic tire and a second group of cords oriented in a second direction relative to the centerline of the pneumatic tire.

According to a preferred aspect of the method, a further step includes manufacturing the third belt as an integral structure from a continuous circular band.

According to preferred aspect of the method, a still further step includes interlacing the first group of cords and the second group of cords.

### Definitions

"Apex" or "bead filler apex" means an elastomeric filler located radially above the bead core and between the plies and the turnup plies.

"Axial" and "Axially" mean the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Carcass" means the tire structure apart from the belt structure, tread, undertread over the plies, but including the beads.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Equatorial Plane" means the plane perpendicular to the tire's axis of rotation and passing through the center of its tread; or the plane containing the circumferential centerline of the tread.

"Flipper" refers to a reinforcing fabric around the bead wire for strength and to tie the bead wire in the tire body.

"Gauge" refers generally to a measurement and specifically to thickness.

"Inner Liner" means the layer or layers of elastomer or other material that form the inside surface of a tubeless tire and that contain the inflating fluid within the tire.

"Lateral" means a direction parallel to the axial direction.

"Ply" means a cord-reinforced layer of rubber-coated radially deployed or otherwise parallel cords.

"Radial" and "radially" mean directions radially toward or away from the axis of rotation of the tire.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Tread width" means the arc length of the tread surface in the plane including the axis of rotation of the tire.

### Brief Description of the Drawings

The structure, operation, and advantages of the present invention will become more apparent upon contemplation of the following description taken in conjunction with the accompanying drawings, wherein:
FIG. 1 represents a schematic cross-sectional view of an example tire for use with the present invention; and
FIG. 2 represents a schematic detail view of a single belt ply in accordance with the present invention.

### Detailed Description of Example Embodiments of the Present Invention

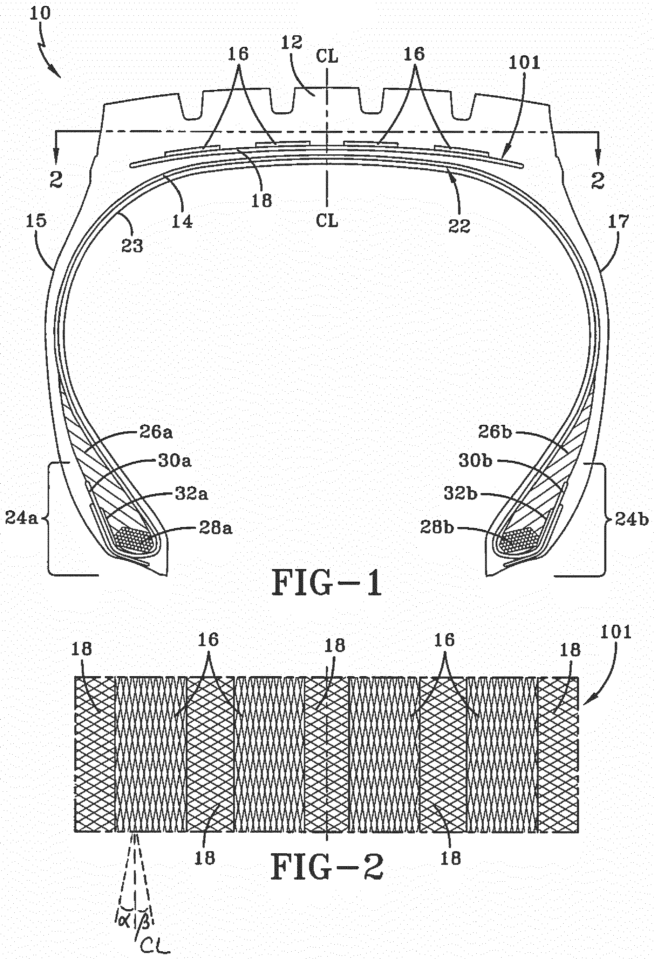

FIGS. 1 and 2 show an example tire 10 for use with reinforcing structures, such as flippers and chippers, in accordance with the present invention. The example tire 10 may have a tread 12, an inner liner 23, a belt structure 101 comprising a first portion including a belt 18 and a second portion including multiple band structures 16, a carcass 22 with a carcass ply 14, two sidewalls 15, 17 and two bead regions 24a, 24b comprising bead filler apexes 26a, 26b and beads 28a, 28b. The example tire 10 may be suitable, for example, for mounting on a rim of a passenger vehicle. The carcass ply 14 may include a pair of axially opposite end portions 30a, 30b, each of which is secured to a respective one of the beads 28a, 28b. Each axial end portion 30a or 30b of the carcass ply 14 may be turned up and around each respective bead 28a, 28b to a position sufficient to anchor each axial end portion 30a, 30b.

The carcass ply 14 may be a rubberized ply having a plurality of substantially parallel carcass reinforcing members made of such material as polyester, rayon, or similar suitable organic polymeric compounds. The carcass ply 14 may engage the axial outer surfaces of two flippers 32a, 32b.

In accordance with the present invention, as shown in FIG. 2, a conventional multiple belt construction may be replaced with a belt structure 101 for reducing weight without degrading performance of the tire 10. The belt structure 101 may include a first single belt 18 and a second plurality of band structures 16. Two-dimensional structural characteristics may be achieved in the first single belt 18 with rubberized yarns/cords oriented in several directions (e.g., two directions of the first single belt construction 18). A further advantage to this structure is that forces are counteracted internally within the singe belt 18 rather than forces being counteracted between several layers (e.g., multiple belts). Steel cords may also be replaced with lighter fiber cords in this construction without degrading other functional properties of the tire 10. Such a single belt 18 may be wound in a continuous fashion using high performance fibers. In the two bidirectional example of FIG. 2, the cords may be interlaced or radially separate. Both provide a reduced weight to the conventional belt approach.

Two-dimensional structural characteristics may also be achieved in the multiple bands 16 with rubberized yarns/cords oriented in several directions (e.g., two directions of each of the multiple bands 16). A further advantage to this structure is that forces are counteracted internally within each band 16 rather than forces being counteracted between several layers (e.g., multiple band layers). Steel cords may also be replaced with lighter fiber cords in this construction without degrading other functional properties of the tire 10. Such bands 16 may be wound in a continuous fashion using high performance fibers. In the two bidirectional example of FIG. 2, the cords may be interlaced or radially separate or spaced apart. Both provide a reduced weight to the conventional belt approach. The multiple bands 16 may thereby result in a lighter overlay-type structure. As shown in FIG. 1, each groove of the tread 12 may have a corresponding band 16 axially aligned therewith.

The belt structure 101 may allow as much as a 9.5% weight savings over a conventional belt/overlay structures. Further, hoop stiffness may be tuned to obtain uniform pressure distribution (from shoulder and intermediate ribs) and stable vibration modes. A shear transfer layer (not shown) may also be placed between the belt structure 101 and the carcass 22.

Utilizing certain manufacturing techniques, the entire belt structure 101 may be manufactured as an integral structure from a continuous circular band. Alternatively, each circular band 16 may have a biased and interlaced structure of cords with design parameters independent of the other bands. Also, each band 16 may have biased internal/interior angles between cords and angles may be different for each band. Each band 16 may have cord count/yarn density different from other adjacent bands 16. Individual cords or an entire fabric may be rubberized.

As stated above, a belt structure 101 in accordance with the present invention may produce reduced weight with comparable performance in a tire 10. This belt structure 101 thus lightens the tire 10 with essentially no performance tradeoff, even though the complexities of the structure and behavior of the pneumatic tire are such that no complete and satisfactory theory has been propounded. Only through extensive experimentation has the belt structure 101 of the present invention been revealed as an excellent, unexpected, and unpredictable option for a complete belt structure.

## Claims

1. A pneumatic tire comprising a carcass reinforced by a carcass ply (14) extending from a first bead to a second bead (28a, 28b) and a belt structure (101) being disposed radially outward of the carcass ply (14) in a crown portion of the pneumatic tire (10), wherein the belt structure (101) has a first belt portion or layer (18) and a second belt portion comprising a plurality of bands (16), wherein the first belt portion or layer (18) extends axially from a first shoulder portion of the crown portion of the tire (10) to a second shoulder portion of the crown portion of the tire (10) or extends axially between a first shoulder portion of the crown portion of the tire (10) and a second shoulder portion of the crown portion of the tire (10) over at least 50% of the section width of the tire (10), preferably in a range of from 70% to 95% of the section width of the tire (10), wherein each band (16) of the plurality of bands (16) has an axial width less than the axial width of the first belt portion or layer (18) or wherein each band (16) of the plurality of band (16) has an axial width in a range of from 5% to 25% of the section width of the tire (10), and wherein at least one band (16) of the plurality of bands (16) includes a first group of cords or filaments oriented in a first direction relative to the direction of the centerline (CL) of the pneumatic tire (10) and a second group of cords or filaments oriented in a second direction different from the first direction relative to the direction of the centerline (CL) of the pneumatic tire (10).

2. The pneumatic tire of claim 1 wherein cords or filaments of the first group extend in parallel with respect to each other and make a first angle α with the centerline (CL) and wherein the cords of filaments of the second group extend in parallel with respect to each other and make a second angle ß with the direction centerline (CL) and wherein:
(i) α = - ß; and/or
(ii) α is in a range of from 1 to 45 degrees or 10 to 30 degrees; and/or
(iii) ß is in a range of from -1 to -45 degrees or -10 to -30 degrees.

3. The pneumatic tire of claim 1 or 2 wherein the second portion comprises 3 to 6 bands (16).

4. The pneumatic tire of claim 1, 2 or 3, wherein each of the plurality of bands (16) has the same axial width.

5. The pneumatic tire of at least one of the previous claims wherein each of the plurality of bands (16) has the same orientation of the cords or filaments in the respective band (16).

6. The pneumatic tire of at least one of the previous claims wherein the plurality of band are arranged in a non-overlapping relationship with the clearance between the bands (16) in the axial direction is in a range of from 2% to 20%, preferably 5% to 15%, of the section width of the tire.

7. The pneumatic tire of at least one of the previous claims wherein the plurality of bands (16) are located radially outside of and adjacent to the first portion or layer (18).

8. The pneumatic tire of at least one of the previous claims wherein the first group of cords or filaments has a linear density value in a range of from 1000 dtex to 4000 dtex.

9. The pneumatic tire of at least one of the previous claims wherein the second group of cords or filaments has a linear density value in a range of from 1000 dtex to 2000 dtex or of from 3000 dtex to 4000 dtex.

10. The pneumatic tire of at least one of the previous claims wherein the first group of cords or filaments has a structure of one single polyamide or nylon core yarn and two aramid wrap yarns; and/or wherein the second group of cords or filaments has a structure of one single polyamide or nylon core yarn and two aramid wrap yarns.

11. The pneumatic tire of at least one of the previous claims wherein the first group of cords or filaments has an end count of ends per 2.54 cm in the range of from 15 to 32; and/or wherein the second group of cords or filaments has an end count of ends per 2.54 cm in the range of from 15 to 32.

12. The pneumatic tire of at least one of the previous claims wherein the first group of cords or filaments is interlaced with the second group of cords or filaments.

13. The pneumatic tire of at least one of the previous claims wherein the first group of cords or filaments is radially spaced apart from the second group of cords or filaments.

14. The pneumatic tire of at least one of the previous claims wherein the belt structure (101) is entirely constructed single continuous band as an integral structure.
